# DEMANDE DE BREVET EUROPEEN

(11) **EP 4 467 949 A1**
(43) Date de publication de la demande: **27.11.2024**
(21) Numéro de dépôt: 24176890.2
(22) Date de dépôt: 20.05.2024
(51) Int. Cl.: G01L 3/14, B62M 3/00, B62M 6/00, B62J 45/411, B62J 45/421, B62M 1/36, B62M 6/50

(54) **SYSTÈME DE DÉTERMINATION D'UN COUPLE APPLIQUÉ ENTRE DEUX ORGANES TOURNANTS**

(30) Priorité: 22.05.2023 FR 2305020
(71) Demandeur: NTN Europe, 74000 Annecy (FR)
(72) Inventeur: RUHLAND, Siegfried, 74010 Annecy Cedex (FR); BAUDU, Alexandre, 74010 Annecy Cedex (FR)
(74) Mandataire: Sayettat, Julien Christian

(57) **Abrégé**

L'invention concerne un système de détermination d'un couple appliqué entre deux organes tournants (1, 2), comprenant un corps d'épreuve présentant une bague intérieure (5) équipée d'un dispositif d'accouplement en rotation à un premier des organes (1) et une bague extérieure (6) destinée à entraîner en rotation le deuxième des organes (2), et un dispositif de détermination d'un angle entre les bagues (5, 6) qui est fonction du couple appliqué, ledit système comprenant une pièce d'interface (19) pourvue d'un mécanisme (27) d'entrainement en rotation du deuxième organe (2) et d'un dispositif (27) d'accouplement en rotation à la bague extérieure (6), ladite pièce d'interface étant équipée d'un palier (20) de guidage de sa rotation par rapport au premier organe (1), ledit palier étant agencé pour assurer un maintien radial de ladite pièce d'interface sur ledit premier organe.

## Description

L'invention concerne un système de détermination d'un couple appliqué entre deux organes tournants, ainsi qu'un module comprenant un tel système avec un arbre tournant et un deuxième organe entre lesquels un couple à déterminer est transmis.

L'invention s'applique en particulier à la détermination d'un couple appliqué entre deux organes intégrés dans une transmission d'un couple moteur à un véhicule, par exemple entre le moteur électrique ou le pédalier et la transmission mécanique d'un vélo à assistance électrique.

Pour ce faire, il est connu d'utiliser un corps d'épreuve présentant une bague intérieure équipée d'un dispositif d'accouplement en rotation à un premier des organes et une bague extérieure destinée à entraîner en rotation le deuxième des organes, ladite bague extérieure s'étendant autour de la bague intérieure et lesdites bagues étant reliées de façon concentrique par une structure déformable qui est agencée pour transmettre le couple entre les organes tout en autorisant un débattement angulaire entre lesdites bagues en fonction du couple appliqué entre lesdits organes.

Un tel corps d'épreuve peut être instrumenté avec un codeur en équipant chacune des bagues d'un anneau portant une piste magnétique respectivement intérieure et extérieure qui est apte à émettre un signal périodique représentatif du déplacement en rotation de la bague correspondante. En particulier, chacune des pistes présente une succession de paires de pôles Nord et Sud pour former une piste magnétique multipolaire délivrant un signal magnétique pseudo-sinusoïdal.

Le système de détermination comprend alors un capteur présentant un premier - respectivement un deuxième - motif d'éléments sensibles disposé à distance de lecture de la piste intérieure - respectivement de la piste extérieure - pour former un signal représentatif de la position angulaire de l'anneau correspondant.

Les documents FR-2 816 051, FR-2 821 931 et FR-2 862 382 décrivent l'utilisation d'un dispositif de comparaison de tels signaux qui est apte à déterminer un écart angulaire entre les bagues, et donc le couple appliqué en ce qu'il induit ledit angle par torsion de la structure déformable.

Dans certaines applications, le couple appliqué entre les organes peut comprendre une composante radiale qui sollicite la structure déformable. En particulier, le porte-satellite d'une boîte de vitesse d'un vélo à assistance électrique peut être monté flottant par rapport à un arbre et donc appliquer un effort radial sur la structure déformable d'un corps d'épreuve dont la bague extérieure entraine en rotation ledit porte-satellite et la bague intérieure est montée sur l'arbre.

Ainsi, outre le débattement angulaire nécessaire à la détermination du couple, la structure déformable peut présenter un débattement radial qui induit une excentration des bagues et donc des pistes magnétiques, ce qui a un impact négatif direct sur la précision de la détermination de l'angle entre les bagues et donc du couple.

Ce problème est d'autant plus critique dans le cas d'un corps d'épreuve d'encombrement réduit, notamment radialement, qui contraint d'autant plus la réalisation de la structure déformable en particulier relativement à sa rigidité radiale par rapport à sa déformation en torsion qui doit induire un débattement de l'ordre de quelques degrés d'angle tout en résistant à un couple de l'ordre de 250 Nm.

L'invention a pour but d'améliorer l'art antérieur en proposant notamment un système de détermination dans lequel l'excentration sous effort des bagues est limitée sans contraindre la conception de la structure déformable, notamment en relation avec le débattement angulaire des bagues qui est nécessaire à la précision de la détermination du couple.

A cet effet, selon un premier aspect, l'invention propose un système de détermination d'un couple appliqué entre deux organes tournants, ledit système comprenant :
- un corps d'épreuve présentant une bague intérieure équipée d'un dispositif d'accouplement en rotation à un premier des organes et une bague extérieure destinée à entraîner en rotation le deuxième des organes, ladite bague extérieure s'étendant autour de la bague intérieure et lesdites bagues étant reliées de façon concentrique par une structure déformable qui est agencée pour transmettre le couple entre les organes tout en autorisant un débattement angulaire entre lesdites bagues en fonction du couple appliqué entre lesdits organes ;
- un dispositif de détermination d'un angle entre les bagues qui est fonction du couple appliqué ;
ledit système comprenant une pièce d'interface pourvue d'un mécanisme d'entrainement en rotation du deuxième organe et d'un dispositif d'accouplement en rotation à la bague extérieure, ladite pièce d'interface étant équipée d'un palier de guidage de sa rotation par rapport au premier organe, ledit palier étant agencé pour assurer un maintien radial de ladite pièce d'interface sur ledit premier organe.

Selon un deuxième aspect, l'invention propose un module comprenant un arbre tournant et un deuxième organe entre lesquels un couple est transmis, ledit module comprenant un tel système de détermination dudit couple dans lequel la pièce d'interface entraine en rotation le deuxième organe en étant accouplée en rotation à la bague extérieure du corps d'épreuve, la bague intérieure dudit corps d'épreuve présentant un alésage d'association autour de l'arbre tournant, le palier de guidage étant montée en rotation sensiblement sans jeu radial autour dudit arbre.

D'autres objets et avantages de l'invention apparaîtront dans la description qui suit, faite en référence aux figures annexées, dans lesquelles :
[Fig.1] est une représentation partielle en perspective du pédalier d'un vélo à assistance électrique équipé d'un système de détermination d'un couple selon un mode de réalisation de l'invention,
[Fig.1a] étant une vue éclatée de la figure 1,
[Fig.1b] étant une vue partielle en coupe longitudinale de la figure 1 ;
[Fig.2] est une représentation éclatée d'un corps d'épreuve équipé d'un dispositif de mesure angulaire pour un système selon l'invention ;
[Fig.3] est une représentation partielle éclatée du pédalier d'un vélo à assistance électrique équipé d'un système de détermination d'un couple selon un deuxième mode de réalisation de l'invention,
[Fig.3a] étant une vue partielle en coupe longitudinale de la figure 3 ;
[Fig.4] est une représentation partielle éclatée du pédalier d'un vélo à assistance électrique équipé d'un système de détermination d'un couple selon un troisième mode de réalisation de l'invention,
[Fig.4a] étant une vue partielle en coupe longitudinale de la figure 4.

En relation avec ces figures, on décrit ci-dessous un système de détermination d'un couple appliqué entre deux organes tournants 1, 2, ainsi qu'un module comprenant deux organes 1, 2 et un tel système pour déterminer le couple transmis entre lesdits organes.

Dans cette description, les termes de positionnement dans l'espace sont pris en référence à l'axe R de rotation du premier organe 1. En particulier, les termes « intérieur » et « extérieur » sont relatifs à une disposition respectivement proche et à distance de cet axe R, et les termes « axial » et « radial » sont relatifs à une disposition respectivement suivant cet axe R et s'éloignant ou se rapprochant de lui.

En particulier, le système permet la détermination d'un couple appliqué entre deux organes 1, 2 d'un module intégré dans une transmission d'un couple moteur à un véhicule, par exemple entre le moteur électrique ou le pédalier et la transmission mécanique d'un vélo à assistance électrique.

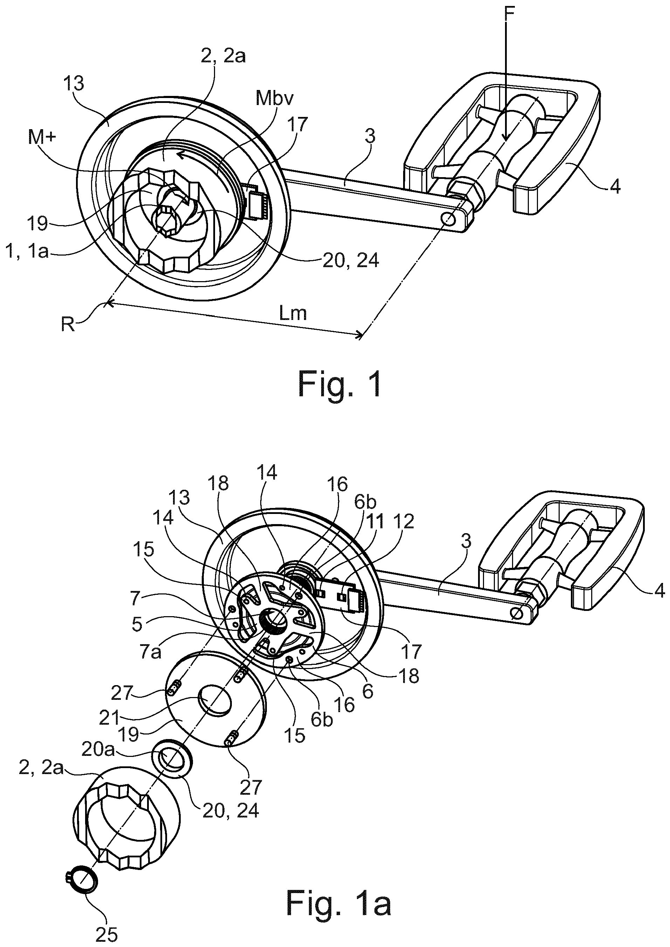

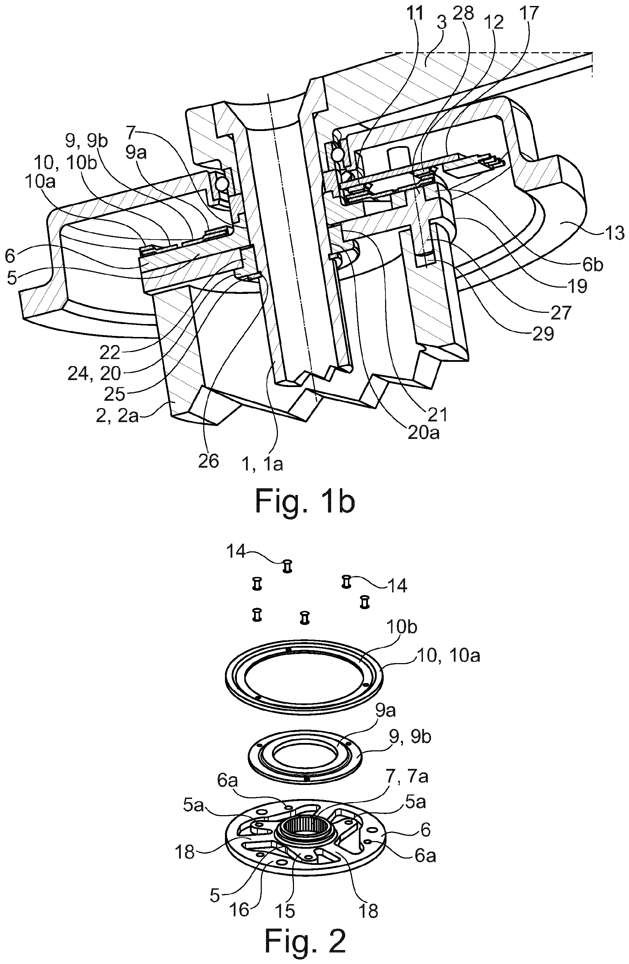

La figure 1 représente un pédalier d'un vélo à assistance électrique comprenant une manivelle 3 équipée d'une pédale 4, ladite manivelle étant montée sur un arbre 1a entraîné en rotation selon l'axe R pour former un organe 1 d'application d'un couple de pédalage M+ suivant le sens de pédalage.

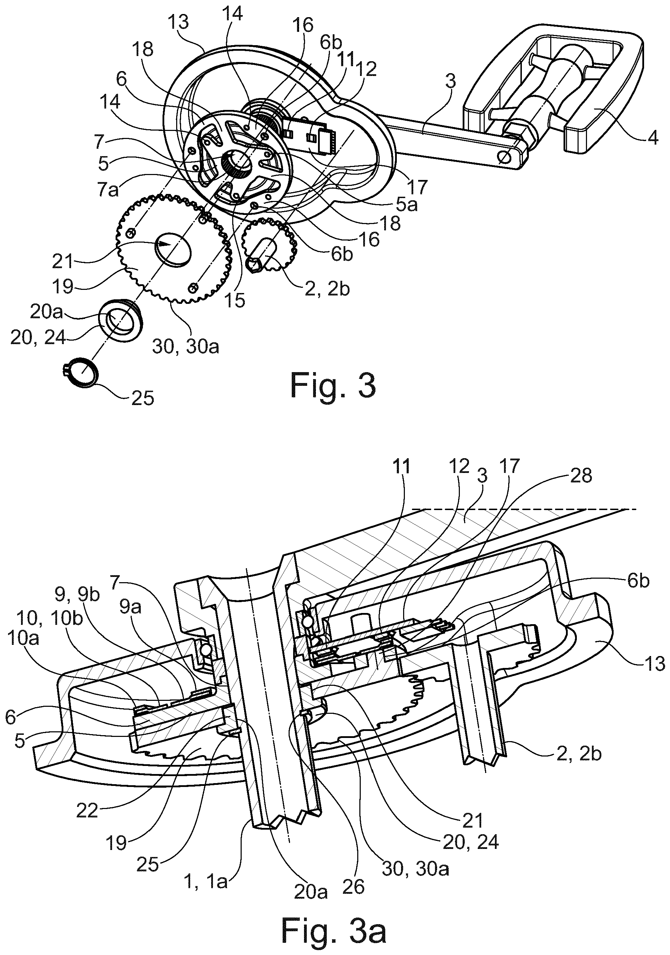

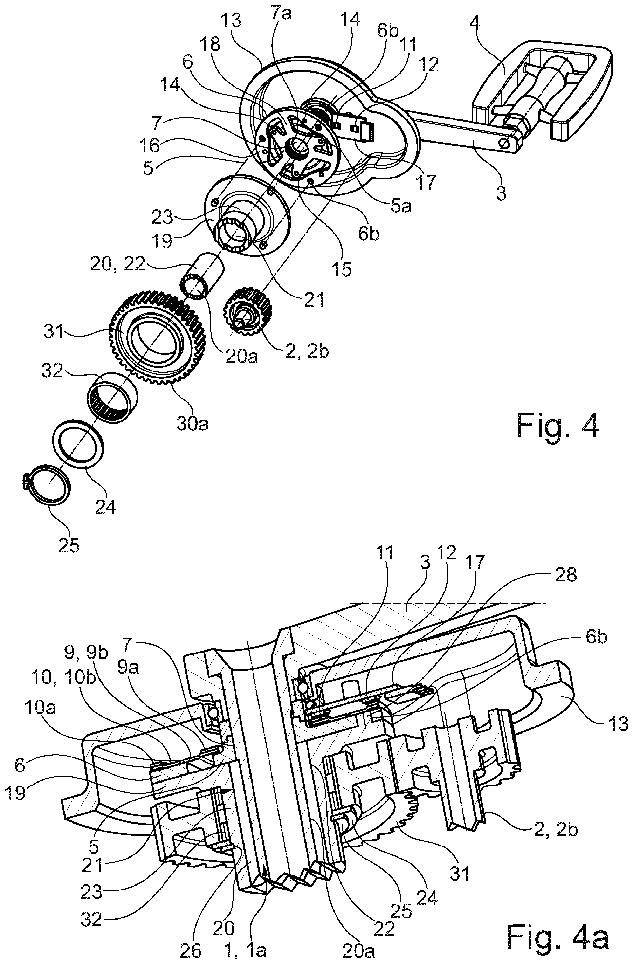

Le système comprend un corps d'épreuve qui permet de transmettre le couple de pédalage M+ à l'autre des organes 2 du module, qui, sur les figures, est représenté sous la forme :
- d'un manchon 2a, par exemple d'un porte satellite d'un train épicycloïdal d'une boîte de vitesse motorisée, exerçant un couple Mbv (figures 1, 1a, 1b) ; ou
- d'un pignon 2b, par exemple d'une boîte de vitesses motorisée (figures 3, 3a, 4, 4a).

Dans cette application, l'effort de pédalage F en bout de pédale 4 à considérer suivant la norme EN15194 : 2017 est de 1 500 N qui, avec une longueur Lm de manivelle de 165 mm, engendre un couple M+ de l'ordre de 250 Nm. En particulier, le couple à transmettre par le corps d'épreuve n'est que dans un sens de rotation (celui représenté M+ sur les figures), dans la mesure où l'autre sens correspond à la roue libre du vélo.

Le corps d'épreuve présente :
- une bague intérieure 5 équipée d'un dispositif d'accouplement en rotation au premier organe 1 ; et
- une bague extérieure 6 s'étendant autour de la bague intérieure 5 et destinée à entraîner en rotation le deuxième organe 2.

En relation avec les figures, la bague intérieure 5 présente un alésage 7 équipé des moyens d'accouplement sur l'arbre, par exemple sous la forme d'un taraudage ou de cannelures.

Selon une réalisation, une noix d'accouplement du corps d'épreuve avec le premier organe 1 peut être rapportée en étant fixée dans l'alésage 7, ladite noix présentant un alésage permettant l'accouplement, par exemple en étant équipé d'un taraudage ou de cannelures.

La noix peut être maintenue dans l'alésage 7 :
- par rivetage, en présentant pour ce faire une bride dans laquelle des orifices sont formés, le bord de l'alésage étant pourvu d'orifices complémentaires permettant le rivetage de ladite noix au moyen de rivets ; ou
- par sertissage, ou en étant maintenue dans ledit alésage par soudure.

En relation avec les figures, l'alésage 7 est directement pourvu de cannelures 7a d'accouplement avec l'arbre 1a du premier organe 1.

Les bagues 5, 6 sont reliées de façon concentrique autour de l'axe R par une structure déformable qui est agencée pour transmettre le couple entre les organes 1, 2, tout en autorisant un débattement angulaire entre lesdites bagues en fonction du couple appliqué entre lesdits organes.

En particulier, le couple résultant du couple de pédale M+ appliqué sur la bague intérieure 5 et du couple Mbv appliqué sur le manchon 2a ou le pignon 2b par la bague extérieure 6 induit une torsion entre les bagues 5, 6 et donc un déplacement angulaire relatif desdites bagues suivant un angle de torsion qui est fonction dudit couple.

Le système comprend un dispositif de détermination de l'angle entre les bagues 5, 6 qui, notamment en tenant compte de la raideur de la structure déformable, est fonction du couple appliqué.

Selon une réalisation, le dispositif de détermination comprend :
- un codeur réalisé en équipant chacune des bagues 5, 6 d'un anneau 9, 10 portant une piste magnétique respectivement intérieure 9a et extérieure 10a qui est apte à émettre un signal périodique représentatif du déplacement en rotation de la bague 5, 6 correspondante ;
- un capteur comprenant un premier 11 - respectivement un deuxième 12 - motif d'éléments sensibles disposé à distance de lecture de la piste intérieure 9a - respectivement de la piste extérieure 10a - pour former un signal représentatif de la position angulaire de l'anneau 9, 10 correspondant ;
- un dispositif de comparaison des signaux délivrés par le capteur, ledit dispositif étant apte à déterminer un angle entre les bagues 5, 6 qui est fonction du couple appliqué.

En relation avec les figures, l'axe du pédalier est monté en rotation dans un carter 13 sur lequel le capteur est implanté avec les motifs 11, 12 à distance de lecture des pistes 9a, 10a correspondantes.

Selon une réalisation, chacun des anneaux 9, 10 est porté par une armature respectivement intérieure 9b et extérieure 10b, la bague intérieure 5 - respectivement extérieure 6 - présentant des moyens de fixation de l'armature intérieure - respectivement extérieure - sur elle.

En particulier, chacune des bagues 5, 6 présente des orifices 5a, 6a de fixation des armatures 9b, 10b, notamment par des rivets 14 ou par vissage. En relation avec les figures, la bague intérieure 5 - respectivement extérieure 6 - présente une paroi circonférentielle extérieure - respectivement intérieure - pourvue de trois lobes radiaux 15, 16, ainsi que trois orifices 5a, 6a de fixation disposés à 120° les uns des autres en étant formés sur chacun des lobes 15, 16.

Selon une réalisation, une succession de paires de pôles Nord et Sud est aimantée sur respectivement un anneau 9, 10 pour former une piste magnétique multipolaire 9a, 10a apte à émettre un signal magnétique de forme pseudo-sinusoïdale.

Les anneaux 9, 10 peuvent comprendre une matrice annulaire, par exemple réalisée à base d'un matériau plastique ou élastomère, dans laquelle sont dispersées des particules magnétiques, notamment des particules de ferrite ou de terres rares comme le NdFeB, lesdites particules étant aimantées pour former les pistes magnétiques 9a, 10a.

Chaque motif 11, 12 peut comprendre au moins deux éléments sensibles, notamment une pluralité d'éléments sensibles alignés, tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste 9a, 10a à détecter, par exemple de type AMR, TMR ou GMR, ou d'une sonde à effet Hall.

Selon une réalisation, la position angulaire peut être déterminée de façon incrémentale au moyen du signal émis par une piste magnétique 9a, 10a. Selon une autre réalisation, la position angulaire peut être déterminée de façon absolue, c'est-à-dire par rapport à une position de référence, en prévoyant une piste magnétique secondaire ou un codage spécifique sur l'anneau 9, 10.

Le système comprend en outre un dispositif de comparaison des signaux délivrés par le capteur, ledit dispositif étant apte à déterminer un angle entre les bagues 5, 6 qui est fonction du couple appliqué. En relation avec les figures, le capteur comprend une carte 17 sur laquelle les motifs 11, 12 d'éléments sensibles sont implantés dans un circuit électronique.

Selon une réalisation, les capteurs délivrent des signaux carrés incrémentaux en quadrature, le dispositif de comparaison comprenant des moyens de comptage indiquant la position angulaire de chacun des anneaux 9, 10 et des moyens de soustraction permettant de calculer la différence entre lesdites positions angulaires, notamment tels que décrit dans les documents FR-2 816 051, FR-2 821 931 et FR-2 862 382.

La structure déformable comprend un ensemble de branches 18 réparties angulairement entre les bagues 5, 6. En particulier, les branches 18 et les bagues 5, 6 sont formées d'une seule pièce, par exemple par découpe avec une machine à fil ou par emboutissage d'un flan en matériau métallique, ou encore par découpe laser ou par jet d'eau.

Sur les figures, les branches 18 sont inclinées dans le sens inverse de la rotation, ce qui engendre un bras de levier qui, en sollicitant les branches 18 en traction, réduit les contraintes d'une manière très efficace avec comme contrepartie une augmentation de la raideur.

Dans les modes de réalisation représentés, le corps d'épreuve comprend trois branches 18 qui sont séparées par un secteur dépourvu de branche. En particulier, les secteurs dépourvus de branche s'étendent sur un angle qui est supérieur à 60°, les lobes 15, 16 s'étendant chacun dans un secteur dépourvu de branche.

En variante, les branches 18 peuvent présenter une conformation géométrique en forme de S, deux sections coudées respectivement intérieure et extérieure raccordées chacune à respectivement la bague intérieure 5 et la bague extérieure 6. Cet agencement permet de limiter l'encombrement radial du corps d'épreuve tout en augmentant la longueur des branches 18 afin de réduire leur raideur, notamment en maximisant l'amplitude des sections coudées.

Le système comprend en outre une pièce d'interface 19 qui est pourvue d'un mécanisme d'entraînement en rotation du deuxième organe 2 et d'un dispositif d'accouplement en rotation à la bague extérieure 6, ladite pièce d'interface étant également pourvue d'un palier 20 de guidage de sa rotation par rapport au premier organe 1, ledit palier étant agencé pour assurer un maintien radial de ladite pièce d'interface sur ledit premier organe.

En particulier, le palier de guidage comprend un alésage 20a pour permettre son montage en rotation sensiblement sans jeu radial autour de l'arbre 1a du premier organe 1, ce qui permet de limiter la transmission à la bague extérieure 6 des oscillations radiales du deuxième organe 2, et ainsi d'améliorer la précision des mesures effectuées par le capteur pour déterminer le couple appliqué entre les organes 1, 2.

Sur les figures, la pièce d'interface 19 est montée en rotation sur l'arbre 1a par l'intermédiaire d'un palier lisse agencé pour assurer le guidage en rotation de ladite pièce par glissement. En variante, la pièce d'interface 19 peut être montée en rotation sur l'arbre 1a par l'intermédiaire d'un palier à roulement, notamment d'une douille à aiguilles.

Dans les modes de réalisation représentés, la pièce d'interface 19 présente une géométrie discoïdale qui présente un alésage central 21 dans lequel une couronne extérieure 22 du palier 20 est associée sensiblement sans jeu radial, notamment en étant frettée dans l'alésage 21 de la pièce d'interface 19.

En particulier, sur les figures 4, 4a, la pièce d'interface 19 présente un fût 23 qui s'étend axialement au centre de sa géométrie discoïdale, l'alésage 21 de montage du palier 20 étant formé dans ledit fût.

La pièce d'interface 19 et le palier 20 sont maintenus axialement sur l'arbre 1a au moyen d'une rondelle radiale 24 qui est venue de matière avec ledit palier (figures 1, 1a, 1b, 3, 3a) ou formée d'une pièce distincte (figures 4, 4a), ainsi que d'une rondelle élastique 25 de type « circlip » qui est disposée en butée axiale contre la rondelle 24 en étant montée dans une gorge radiale 26 prévue à cet effet dans la périphérie dudit arbre.

La géométrie discoïdale de la pièce d'interface 19 est montée coaxialement en regard axial du corps d'épreuve, et le dispositif d'accouplement de ladite pièce d'interface à la bague extérieure 6 comprend un mécanisme à goupilles 28 engagées dans des orifices 6b de ladite bague extérieure.

Dans la mesure où des tolérances de fabrication peuvent engendrer que les goupilles 28 ne soient pas parfaitement concentriques avec la bague extérieure 6, un jeu peut être prévu dans ce dispositif d'accouplement afin d'en faciliter le montage. Un deuxième aspect avantageux de ce dispositif d'accouplement est que d'éventuels déformations de l'arbre 1a sous charge ne se transmettent pas ou peu sur la bague extérieure 6.

En particulier, la pièce d'interface 19 et la bague extérieure 6 comprennent respectivement trois orifices goupilles et trois orifices 6b espacés de 120°, les orifices 6b de ladite bague extérieure étant notamment formés chacun sur respectivement un lobe 16.

Sur les figures 1, 1a, 1b, le mécanisme d'entraînement en rotation du deuxième organe 2 par la pièce d'interface 19 comprend un mécanisme à goupilles 27 engagées dans des orifices 29. Pour ce faire, le manchon 2a comprend trois orifices borgnes 29 espacés de 120°, la pièce d'interface 19 portant trois goupilles 27 formées à l'opposé des goupilles 28 d'accouplement à la bague extérieure 6.

En relation avec la figure 1b, les goupilles 27, 28 sont portées par des axes qui permettent de reprendre directement le couple, lesdites axes pouvant en outre être localisés avec une bonne précision.

Cette réalisation permet ainsi d'obtenir un vélo à assistance électrique à deux moyens de propulsion :
- une propulsion musculaire engendrée par le pédalage du cycliste, qui rentre par l'axe 1a de pédale, qui est transmis par l'intermédiaire du corps d'épreuve sur le réducteur et puis par la transmission (chaine, cardan, courroie) sur la roue arrière ;
- un moteur électrique, dont le couple rentre directement dans le réducteur (deuxième organe 2) et s'y ajoute au couple de la propulsion musculaire.
Ainsi les goupilles 28, 27 transmettent le couple du corps d'épreuve vers le réducteur.

Sur les figures 3, 3a, 4, 4a, la pièce d'interface 19 entraine en rotation le deuxième organe 2 par l'intermédiaire d'un mécanisme d'engrenages.

Sur les figures 3, 3a, la géométrie discoïdale de la pièce d'interface 19 présente une périphérie qui est pourvue de dents 30a d'engrenage pour coopérer avec le pignon 2b du deuxième organe 2.

Sur les figures 4, 4a le mécanisme d'entrainement en rotation du pignon 2b par la pièce d'interface 19 comprend une roue dentée 31 distincte qui est montée en rotation sur le fût central 23 de ladite pièce d'interface au moyen d'un dispositif 32 de roue libre.

## Revendications

1. Système de détermination d'un couple appliqué entre deux organes tournants (1, 2), ledit système comprenant :
- un corps d'épreuve présentant une bague intérieure (5) équipée d'un dispositif d'accouplement en rotation à un premier des organes (1) et une bague extérieure (6) destinée à entraîner en rotation le deuxième des organes (2), ladite bague extérieure s'étendant autour de la bague intérieure (5) et lesdites bagues étant reliées de façon concentrique par une structure déformable qui est agencée pour transmettre le couple entre les organes (1, 2) tout en autorisant un débattement angulaire entre lesdites bagues en fonction du couple appliqué entre lesdits organes ;
- un dispositif de détermination d'un angle entre les bagues (5, 6) qui est fonction du couple appliqué ;
ledit système étant **caractérisé en ce qu'**il comprend une pièce d'interface (19) pourvue d'un mécanisme (27, 30, 31) d'entrainement en rotation du deuxième organe (2) et d'un dispositif (27, 28) d'accouplement en rotation à la bague extérieure (6), et **en ce que** ladite pièce d'interface est équipée d'un palier (20) de guidage de sa rotation par rapport au premier organe (1), ledit palier étant agencé pour assurer un maintien radial de ladite pièce d'interface sur ledit premier organe.

2. Système de détermination d'un couple selon la revendication 1, **caractérisé en ce que** la bague intérieure (5) présente un alésage (7) équipé de moyens (7a) d'accouplement sur un arbre (1a) du premier organe (1), le palier de guidage (20) présentant un alésage (20a) de montage sensiblement sans jeu radial autour dudit arbre.

3. Système de détermination d'un couple selon l'une des revendications 1 ou 2, **caractérisé en ce que** la pièce d'interface (19) présente un alésage (21) dans lequel une couronne extérieure (22) du palier (20) est associée sensiblement sans jeu radial.

4. Système de détermination d'un couple selon l'une quelconque des revendications 1 à 3, **caractérisé en ce que** la pièce d'interface (19) présente une géométrie discoïdale qui est montée coaxialement en regard axial du corps d'épreuve.

5. Système de détermination d'un couple selon l'une quelconque des revendications 1 à 4, **caractérisé en ce que** le dispositif d'accouplement de la pièce d'interface (19) à la bague extérieure (6) comprend un mécanisme à goupilles (28) engagées dans des orifices (6b).

6. Système de détermination d'un couple selon l'une quelconque des revendications 1 à 5, **caractérisé en ce que** le mécanisme d'entrainement en rotation du deuxième organe (2) par la pièce d'interface (19) comprend un mécanisme à goupilles (27) engagées dans des orifices (29).

7. Système de détermination d'un couple selon l'une quelconque des revendications 1 à 5, **caractérisé en ce que** le mécanisme d'entrainement en rotation du deuxième organe (2) par la pièce d'interface (19) comprend un mécanisme d'engrenage (30, 31).

8. Système de détermination d'un couple selon la revendication 7, **caractérisé en ce que** la pièce d'interface (19) présente une périphérie qui est pourvue de dents d'engrenage (30a) pour coopérer avec un pignon (2b) du deuxième organe (2).

9. Système de détermination d'un couple selon l'une quelconque des revendications 1 à 8, **caractérisé en ce que** le mécanisme (31) d'entrainement en rotation du deuxième organe (2) par la pièce d'interface (19) est monté sur la pièce d'interface (19) au moyen d'un dispositif (32) de roue libre.

10. Système de détermination d'un couple selon l'une quelconque des revendications 1 à 9, **caractérisé en ce que** la structure déformable comprend un ensemble de branches (18) réparties angulairement entre les bagues (5, 6).

11. Système de détermination d'un couple selon l'une quelconque des revendications 1 à 10, **caractérisé en ce que** le dispositif de détermination comprend :
- un codeur réalisé en équipant chacune des bagues (5, 6) d'un anneau (9, 10) portant une piste magnétique respectivement intérieure (9a) et extérieure (10a) qui est apte à émettre un signal périodique représentatif du déplacement en rotation de la bague (5, 6) correspondante ;
- un capteur comprenant un premier (11) - respectivement un deuxième (12) - motif d'éléments sensibles disposé à distance de lecture de la piste intérieure (9a) - respectivement de la piste extérieure (10a) - pour former un signal représentatif de la position angulaire de l'anneau (9, 10) correspondant ;
- un dispositif de comparaison des signaux délivrés par le capteur, ledit dispositif étant apte à déterminer un angle entre les bagues (5, 6) qui est fonction du couple appliqué.

12. Module comprenant un arbre tournant (1a) et un deuxième organe (2, 2a, 2b) entre lesquels un couple est transmis, ledit module comprenant un système de détermination dudit couple selon l'une quelconque des revendications 1 à 11 dans lequel la pièce d'interface (19) entraîne en rotation le deuxième organe (2, 2a, 2b) en étant accouplée en rotation à la bague extérieure (6), la bague intérieure (5) présentant un alésage (7) d'association autour de l'arbre tournant (1a), le palier de guidage (20) étant monté en rotation sensiblement sans jeu radial autour dudit arbre.
